# EUROPEAN PATENT SPECIFICATION

(11) **EP 2 747 227 B1**
(45) Date of publication and mention of the grant of the patent: **01.03.2017**
(21) Application number: 12198973.5
(22) Date of filing: 21.12.2012
(51) Int. Cl.: H02G 15/184, B29C 45/14, B29C 39/10

(54) **Multi-layer heat-shrinkable tubular sleeve with stress control elements**
Mehrschichtige wärmeschrumpfbare rohrförmige Hülse mit Belastungssteuerungselementen
Manchon tubulaire thermorétractable multicouche avec éléments de commande de contrainte

(43) Date of publication of application: 25.06.2014
(73) Proprietor: Tyco Electronics Raychem GmbH, 85521 Ottobrunn (DE)
(72) Inventor: Graeve, Bernd, 85579 Neubiberg (DE)
(74) Representative: Grünecker Patent- und Rechtsanwälte PartG mbB

(56) References cited:
- EP-B1- 1 702 391
- WO-A1-99/21259
- WO-A1-2004/040730
- DE-A1- 19 532 559
- GB-A- 2 042 818

## Description

The present invention relates to a multi-layer heat-shrinkable tubular sleeve which can be used to re-insulate and screen connections between cables such as energy cables, a belonging cable connection using such a multi-layer sleeve and to a method for fabricating the multi-layer heat-shrinkable tubular sleeve according to the present invention.

For straight joints connecting polymeric insulated cables with a voltage rating of up to 42 kV, it is known to cover the electric connection of the joint with a pre-expanded single piece silicone rubber tube having a high mechanical expansion capability. In order to provide electrical stress control which is often also referred to as "field control", conductive geometrical stress cones may be integrated into the screen cut area and in the actual connection area, a Faraday cage like screening may be integrated.

Such a known cold-shrinkable straight joint is sold by Tyco Electronics Raychem GmbH under the product name CSJR/CSJH.

The pre-expansion of the silicone rubber joint body is done by means of a spiral hold-out system. By destroying the spiral, the pre-expanded silicone material returns into a shrunk position where it is in direct mechanical contact with the cable and the cable connector.

Cables which are to be connected with such cable connectors usually have a cable insulation sheath with a metal shield, comprising additional inner and outer conductive layers for minimizing electrical stress. When two cables have to be connected to a cable termination or a cable joint, this insulation outer cable sheath and the metal shielding have to be removed together with the outer conductive layer. At the edge of the outer conductive layer an area of enhanced electric fields is generated thereby and in order to guarantee a safe operation, this enhanced electric field has to be attenuated using appropriate means so that no discharges can occur. This attenuation of the electric field is referred to as electrical stress control.

In the known cold-shrinkable silicone joint bodies, such an electrical stress control is fully integrated by providing well-defined conductive areas. Conductive cones within the exactly defined geometrical design being located above the screen cut area provide electrical stress control in a peripheral region. The electrical stress control of the connector area, on the other hand, is ensured by means of an integrated conductive screen operating as a Faraday cage.

These known cold-shrinkable rubber joint bodies, however, suffer from two main problems:
Firstly, spiral hold-outs are problematic, because their removal might damage structures of the underlying electrical connection and, furthermore, causes a lot of waste. Consequently, the European Patent EP 1 702 391 B1 proposes a heat-shrink layer to replace the spiral hold-out.

Secondly, however, it is necessary to ensure a sufficiently constant contact pressure of the electrical stress control elements.

In order to solve the latter problem, it is known to provide an additional non-elastic thermal plastic rejacketing element. For instance, on CSJH joints, the outer sealing and protection is provided by a thick-wall, heat-shrinkable tubing. When installed, this heat-shrinkable tubing provides a similar level of protection compared to the PE oversheath of the unviolated cable. However, applying this outer sealing involves a further mounting and fabrication step and involves providing an additional part in a commercially available connecting kit.

WO 99/21259 A1 discloses a branch splice for joining at least three shielded medium-voltage electric cables. Each of the cables has at least one conductor surrounded by a dielectric layer. To form the splice, a section of the cable dielectric layer is removed to expose a length of the conductor, and a section of an outer electrically conductive shield is removed to expose a length of the dielectric layer so that the exposed conductors of the cables can be joined using the connector. At least two of the cables are positioned in relatively close substantially parallel relationship with each other. The splice includes a stress controlling adapter having an elastomeric body. The adapter body is provided with at least two hollow portions allowing the body to be placed onto the outer electrically conductive shield and the exposed section of the dielectric layer of the cables which are positioned in substantially parallel relationship. In one embodiment, the material of the stress controlling adapter has a relative dielectric constant of greater than 3 and a dielectric strength of at least 10 kV/mm, and includes conductive microspheres uniformly distributed throughout an elastomeric matrix. In another embodiment, the adapter utilizes geometric stress control. The splice is completed by covering with an insulating layer extensible across the splice so as to overlap a portion of the shield of each of the cables and a semi-conductive shielded layer positioned over the insulating layer which is connectable to each of the cable shields.

GB 2 042 818 A discloses an enclosure for electrical apparatus, e.g. a cable splice or termination. the enclosure comprises a first hollow sleeve of insulating material around which is positioned a second sleeve comprising an inner layer of insulating material and an outer layer of conductive material (normally connected to earth, e.g. a cable shield). This construction locates the major discontinuities of the material enclosure wall between layers of the insulating materials thus reducing the electrical stresses which could lead to insulation failure. The first sleeve may have an innermost laminated layer of stress grading material. Electrically conducting material may be present on the inner surface of the first sleeve. Further sleeves may be interposed between the first and second sleeves to increase the insulation for higher voltages, and void filling compound may be used further to improve the electrical conditions within the enclosure. Either or both sleeves may be heat recoverable.

EP 1 702 391 B1 discloses a heat-shrink jointing for an electrical power cable comprising a sleeve having an insulating inner layer, a conductive outer layer and a thermoplastic mid-layer located between the inner and outer layers. The mid-layer is recovered by the application of heat thereto. The insulating inner layer is preferably comprised of an elastomeric material and the thermoplastic mid-layer is rigid and acts to retain the inner layer in a radially expanded state prior to its recovery.

WO 2004/040730 A1 relates to a process for manufacturing an elastomeric sleeve of a joint for electrical cables. The sleeve comprises: an electric field-control element, an electrical insulating element surrounding the electric field-control element, and at least a semi-conductive element comprising two stress control screens. The process of the present invention comprises the steps of: providing the electric field-control element and the two stress control screens on a supporting element; introducing the supporting element into a mould provided for molding the electrical insulating element; filling with said electrical insulating material the space radially external to said electric field-control element and said stress control screens, the step of filling being carried out during said step of introducing; curing the electrical insulating material to obtain the electrical insulating element of the elastomeric sleeve. This document further concerns an apparatus for carrying out said process for manufacturing.

DE 195 32 559 A1 discloses a one-piece sleeve for surrounding a connection between two cables, between a cable and some apparatus or between two apparatuses. The sleeve has a body made of an insulating elastomer inside which is a concentric conducting elastomer. There is an outside shrunk-on shell which is fixed permanently around the insulating body. Accessible at one end of the shell is an integrated conductor. This is a layer formed of single wires distributed equally about the periphery of the body to form a net. At least at one end, the conductor has contacts which mate with counter- contacts of the cables or apparatuses.

The object underlying the present invention is therefore to provide a tubular sleeve for connecting or terminating an electrical cable which can be mounted in a particularly economic way and at the same time ensures a secure electrical stress control and insulation level.

This object is solved by the subject matter of the independent claims. Advantageous improvements of the present invention are the subject matter of the dependent claims.

The present invention is based on the idea to combine an elastomeric insulation layer comprising embedded electrically conductive stress control elements with an outer hold-out layer formed from a heat-shrinkable material. Thus, in a state before being mounted on a cable, a tubular sleeve is provided which incorporates a heat-shrinkable layer as a hold-out and does not need any additional spiral structures for keeping the elastomeric layer in a pre-expanded state. Furthermore, due to the direct contact to the thermoplastic material in the mounted state which then takes a rather rigid structure and exerts a well-defined and adjustable pressure on the elastomeric inner layer, a sufficiently strong mechanical contact to the underlying structures can be ensured to provide adequate sealings throughout the temperature range as well as a perfect integrated electrical stress control.

According to the present invention, the hold-out layer comprises at least one electrically conductive heat-recoverable part. According to an advantageous improvement, also an additional electrically insulating heat-shrinkable material can be provided at the outer hold-out layer. This electrically insulating heat-shrinkable layer forms together with the elastomeric inner layer a safe electrical insulation part.

A further challenging issue regarding the fabrication and use of such a multi-layer tubular sleeve according to the present invention can be seen in interconnecting the hold-out layer with the elastomeric layer. This interconnection has to be firm enough to hold the inner layer even in the expanded state tightly coupled to the outer heat-shrinkable layer. There are several possibilities of enhancing the connection between these two layers. A first option would be to apply adhesion promoting agents, such as silanes, glues or the like, as this is for instance described in US 4,035,534.

In order to enhance the active interconnection surface area, a wave-shaped or otherwise enlarged cross-section can be provided at the interface between the elastomeric and the heat-shrinkable thermoplastic layers.

In order to provide an even firmer connection between these two parts, interlocking structures, such as for instance undercut regions, can be provided.

The present invention also provides a method for fabricating the heat-shrinkable tubular sleeve according to the present invention, which allows in a particularly cost-effective and secure way to embed the electrically conductive stress control elements into the elastomeric inner layer so that they are arranged at a surface which is brought into contact with the cable in a mounted state. In particular, the method comprises the steps of providing a plurality of essentially ring-shaped, electrically conductive stress control elements and arranging same on a fixing tool in a way that they are distanced from each other in a longitudinal direction. A hollow, tube-shaped hold-out layer comprising a heat-shrinkable material is arranged in an essentially concentric way around these stress control elements and is held in this position, leaving a gap between the hold-out layer and the stress control elements. According to the present invention, the stress control elements are then joined by filling in an elastomeric electrically insulating material forming the elastomeric inner layer of the multi-layer heat-shrinkable tubular sleeve. Before mounting the sleeve on a cable, it is heated and expanded. During the installation of a cable termination or cable joint, this expanded tube is positioned and shrunk into its final position by means of heat exposure.

According to the present invention, the additional electrically insulating thermoplastic layer, which can be provided between the electrically conductive outer hold-out layer and the elastomeric material, can be fabricated by a co-extrusion process together with the conductive thermoplastic layer, thereby producing a double-layer tubular hold-out structure. Interlocking structures, which can interact with the elastomeric insulating layer during the expansion process and while being kept on stock, can easily be provided at the hold-out layer during this extrusion process. For these structures, the insulating layer is necessary, because when providing interlocking structures at the electrically conductive material, the homogeneity of the electric field will be negatively influenced.

However, also adhesion promoting agents may be applied to the heat-shrinkable tube before injecting the elastomeric material during the fabrication process.

The invention will be described hereinafter in more detail and in an exemplary manner using advantageous embodiments and with reference to the drawings. The described embodiments are only possible configurations, in which, however, the individual features as described above can be provided independently of one another and can be omitted in the drawings, wherein:
- **FIG. 1**: is a schematic longitudinal cut through a multi-layer heat-shrinkable tubular sleeve according to a first embodiment;
- **FIG. 2**: is a schematic longitudinal cut through a multi-layer heat-shrinkable tubular sleeve according to a second embodiment;
- **FIG. 3**: is a cross-sectional view of the arrangement of FIG. 2 according to a first variant;
- **FIG. 4**: is a cross-sectional view of the arrangement of FIG. 2 according to a second variant.

The present invention will now be described in more detail hereinafter with reference to the accompanying drawing, in which exemplary embodiments of the invention are shown. This invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout. Prime, double-prime and triple-prime notations are used to indicate similar elements in alternate embodiments.

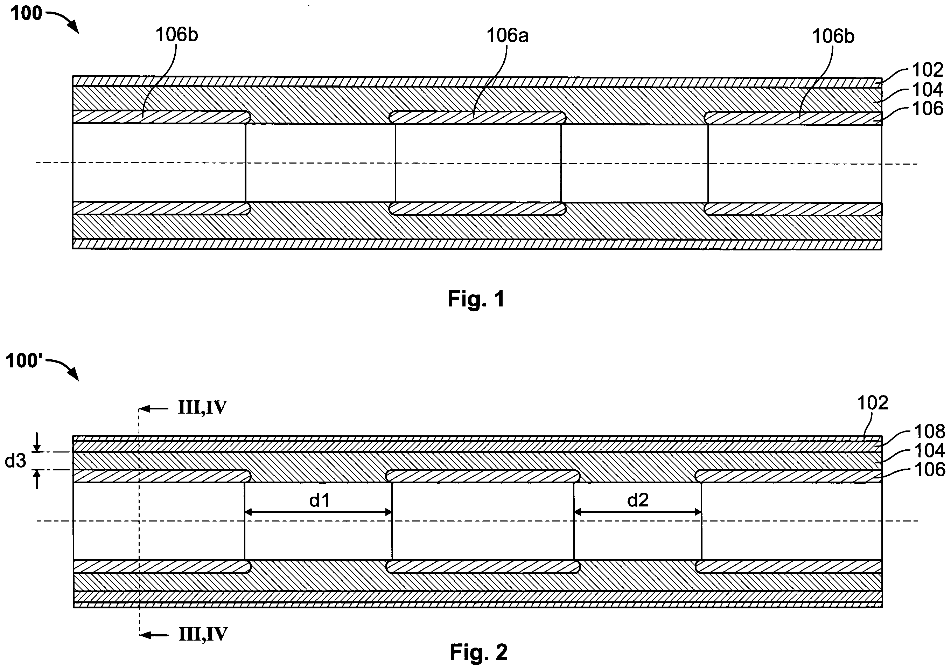

Referring now to FIG. 1, a first embodiment of a multi-layer heat-shrinkable tubular sleeve is shown as a longitudinal cross-sectional view.

As shown in FIG. 1, the multi-layer heat-shrinkable tubular sleeve 100 in a first embodiment comprises a heat-shrinkable hold-out layer 102, which is arranged essentially concentrically around an elastomeric insulating inner layer 104. According to the present invention, essentially ring-shaped electrically conductive or semiconductive stress control elements 106 are embedded into the elastomeric layer 104. In particular, when being arranged in a mounted state around a cable connection, the centrally arranged stress control element 106a will serve as a Faraday cage around the metallic connection between the two cables, whereas the peripheral stress control elements 106b represent integrated geometrical stress cones, as described in the brochure "CSJR/CSJH Cold-shrinkable straight joints for polymeric insulated cables up to 36 kV" by Tyco Electronics Raychem GmbH.

The tubular sleeve 100 according to the present invention may for example be used in a joint for an electrical power cable. The electrical power cable may for example be designed for being used with operation voltages of or above 6 kV. The power cable may be a low-voltage power cable, a medium-voltage power cable or a high-voltage power cable designed for voltages above 42 kV. When using the principles according to the present invention for a termination for an electrical power cable, the heat-shrinkable hold-out layer 102 is not electrically conductive, but has to be track resistant. Furthermore, only one stress control element 106 will be provided and no Faraday cage is needed in a termination.

The tubular sleeve according to the present invention can be shrunk into position around the ends of two electrical power cables that have been electrically connected to each other. As already mentioned, the tubular sleeve 100 may also be used in a cable termination with only one stress control element 106 being designed accordingly.

According to the present invention, the sleeve 100 is of a tubular one-piece construction. In the present application, the term tubular is used to indicate an elongate hollow article which may be a substantially straight sleeve of substantially uniform round or oval cross-section, but is not necessarily limited to any particular longitudinal outline or uniformity of transverse dimension.

According to the present invention, before delivering the sleeve 100 to a customer, same is pre-expanded by applying elevated temperatures. Thereby, the thermoplastic hold-out layer 102 can be expanded together with the elastomeric inner layer 104, for instance by means of a mandrel (not shown in the figures). After cooling and withdrawal of the mandrel, the sleeve 100 stays in an expanded state and can be mounted to cover a newly formed joint without the necessity of a spiral hold-out. After being positioned in the final position, the application of heat causes the tube 100 to shrink and return to the previous diameter.

By choosing appropriate materials for the outer heat-shrinkable hold-out layer 102, it can furthermore be achieved that a particular enhanced contact pressure is exerted on the elastomeric inner layer 104, when the tubular sleeve 100 has been heat shrunk or recovered. Thus, also an enhanced contact pressure is exerted on a cable interface that is arranged within the tubular sleeve 100. In particular, the hold-out layer 102 may be able to exert an enhanced contact pressure on the inner layer 104, because it comprises a major part of partially crystalline thermoplastic material with a crystallinity of more than 60%, as this is described in the European patent application EP 12 158 265.4.

According to the present invention as shown in FIG. 1, the heat-shrinkable hold-out layer 102 is electrically conductive, as this would be the case for a joint. A partially crystalline thermoplastic material with a crystallinity of more than 60% may for example be a polyoxymethylen-homopolymer with a crystallinity of about 90%, a polyoxymethylen copolymer with a crystallinity of about 75%, a Polytetrafluoroethylene (PTFE) with a crystallinity of about 75%, Polytetrafluoroethylene (PTFE) with a crystallinity of 62 to 80%, an isotactic polypropylene (PP) with a crystallinity of 70% to 80%, or a high-density polyethylene (PE-HD or HDPE) with a crystallinity of 70% to 80%. Advantageously, a heat-shrinkable hold-out layer composed of such material is suitable for exerting an enhanced contact pressure on an underlying inner layer. In order to ensure a sufficient pressure, the outer hold-out layer 102 may have a density of at least 0.94 g/cm².

As shown in FIG. 1, the hold-out layer 102 may have an electrical resistivity of less than 100 Ω·cm and therefore is electrically conductive.

The inner layer 104 comprises an elastomeric material in order to elastically follow an extension and recovery of the hold-out layer 102. It has an electrical resistivity of at least 1 TΩ·cm and is therefore electrically insulating. The elastomeric layer 104 may be formed for instance from silicone rubber, ethylene propylene diene monomer (EPDM) rubber or a gel.

According to the present invention, the stress control elements are embedded within the elastomeric layer 104 and, according to a first embodiment, the stress control elements 106 are composed of an elastomeric conductive material. A material may be regarded as electrically conductive if the material has an electrical resistivity of less than 100 Ω·cm. The stress control elements according to this embodiment may for instance be fabricated by dispersing conductive particles in an elastomeric carrier (normally silicone or fluorosilicone) forming a homogenous elastic material with high conductivity. There are a range of conductive fillers that can be dispensed in an elastomer, such as silver-plated aluminium, nickel coated graphite, silver-plated copper, carbon, silver-plated nickel, silver-plated glass, and pure silver.

In an alternative embodiment, the stress control elements 106 of the tubular sleeve 100 comprise an elastomeric electrically stress-grading material. The stress control elements 106 may for example comprise:
55% by weight of ethylene-propylene-diene-monomer elastomer,
40% by weight of thermal and semiconductive carbon blacks,
4.5% by weight of antioxidants and stabilizers, and
0.5% by weight of cross-linking promoters.

As already mentioned, the heat-shrinkable hold-out layer 102 of the sleeve 100 may comprise a thermoplastic material that is electrically conductive. In particular, it has an electrical resistivity of less than 100 Ω·cm and may for instance comprise:
60% to 70% by weight of an ethylene-vinyl-acetate copolymer,
10% to 20% by weight of high density polyethylene,
15% to 25% by weight of conductive carbon black and
1% to 2% by weight of aromatic amine antioxidant.

The individual components of the material may be selected from the specified ranges to total 100%.

FIG. 2 shows an alternative embodiment of the sleeve 100', which compared to the embodiment of FIG. 1 has an additional electrically insulating heat-shrinkable hold-out layer 108, which is arranged within the hold-out layer 102. Due to the mechanical stability that is given by the electrically insulating hold-out layer 108, the electrically conductive outer layer 102 can be fabricated with reduced thickness. Again, an elastomeric layer is arranged within the hold-out layers 102, 108 and has embedded therein stress control elements 106.

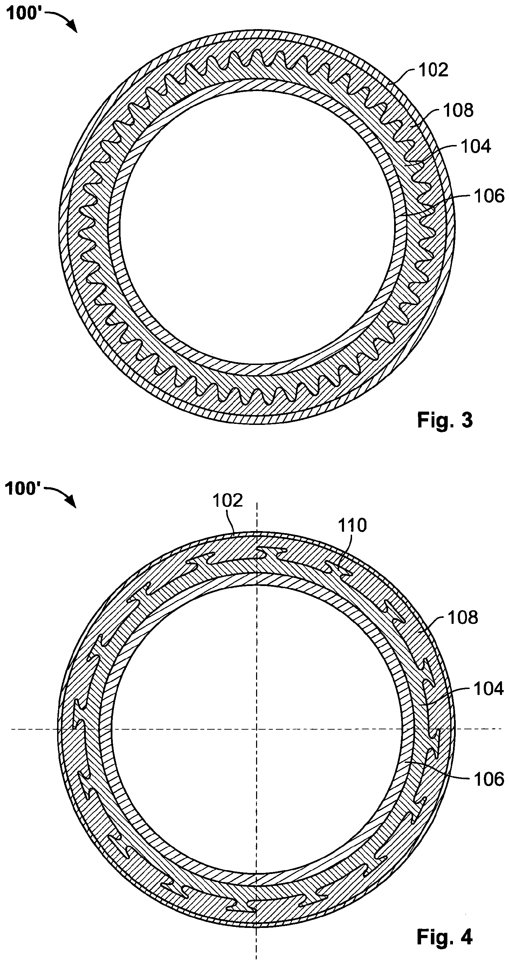

A challenging problem of the composite sleeve 100, 100' according to the present invention is the reliable mechanical connection between the hold-out layer 102 or 108, respectively, and the elastomeric inner layer 104. Apart from providing adhesion promoting agents, such as silanes or a glue, also mechanical solution can be used. The interconnection between the thermoplastic hold-out and the elastomeric inner layers will be explained in more detail with reference to FIG. 3 and 4.

Both figures represent a cross-sectional view of the arrangement of FIG. 2, i. e. they relate to a two-layer heat-shrinkable hold-out formed by a conductive outer layer 102 and insulating inner layer 108.

In particular when using adhesion promoters or glues, an enhanced contact surface area between the heat-shrinkable material 108 and the elastomeric material 104 is advantageous. In the example shown in FIG. 3, this is achieved by means of a wave-shaped circumferential contact surface. However, also zigzag structures or square forms or any other suitable shape deviating from a straight circular form can be used for enhancing the contact surface.

A still firmer contact between the hold-out layer and the elastomeric layer 104 can be achieved by using mechanically interlocking structures as this is depicted exemplarily in FIG. 4. Here, the heat-shrinkable insulating hold-out layer 108 has undercuts 110.

In the shown embodiment of FIG. 4 these undercuts 110 are for instance formed by notches. These can easily be produced when forming the thermoplastic hold-out layers 102, 108 in a co-extrusion process, as this will be explained in more detail in the following.

The advantage of the solution according to FIG. 4 can be seen in the fact that a secure mechanical interlock is formed between the thermoplastic hold-out layer 108 and the elastomeric layer 104. Of course, additionally also adhesion promoters or a glue can be applied.

An advantageous fabrication method for a multi-layer heat-shrinkable tubular sleeve according to the present invention will now be explained in detail again with reference to all the FIG. 1 to 4.

According to the present invention, the stress control elements 106 and the heat-shrinkable hold-out layer 102 or alternatively the two-layered structure 102, 108 are provided by a separate fabrication process. The heat-shrinkable hold-out may for instance be fabricated by an extrusion process and in particular in case of a double layer construction as a co-extrusion process unifying the conductive outer layer 102 and the insulating inner layer 108 as one thermoplastic tube. These parts are then arranged on a mandrel or the like in a non-expanded manner exactly aligning the stress control elements 106 with predefined distances d1, d2.

According to the present invention a gap is left between the inner surface of the thermoplastic hold-out layer 102 or 108, respectively, and the outer surface of the stress control elements 106. In a next step, the elastomeric material 104 is injected or cast into this gap. Thereby the stress control elements are embedded into the elastomeric layer 104.

After the elastomeric layer is cured, the sleeve 100, 100' can be subjected to an expansion step, which enlarges its diameter to a size suitable for being mounted over the cable. This expanded state is normally the state in which the sleeve is delivered to a customer. Advantageously, the thermoplastic outer layer 102 or the combined layer 102 and 108 serve as a hold-out structure, thereby rendering unnecessary any additional hold-out structures, such as spirals or the like.

After being arranged in its final position over a cable, heat will be applied to the sleeve 100, 100' so that the heat-shrinkable material will regain its original diameter. According to the present invention, the outer layer 102, 108 then exerts a pressure onto the elastomeric layer 104 thereby enhancing the contact forces towards the surface of the cable and the cable connection significantly. By improving this mechanical contact, the thickness d3 of the elastomeric insulation layer 104 may advantageously be reduced.

In summary, by means of the multi-layer heat-shrinkable tubular sleeve according to the present invention a particularly safe covering of joints or cable terminations can be achieved in a particularly simple and cost-efficient as well as environmentally conscious way. Moreover, it is clear for a person skilled in the art that still further intermediate, innermost or outermost layers can be provided for the hold-out structure and/or the elastomeric structure if necessary.

**Reference Numerals:**

| **Reference Numeral** | **Description** |
|---|---|
| 100, 100' | sleeve |
| 102 | heat-shrinkable hold-out layer |
| 104 | elastomeric layer |
| 106 | stress control elements |
| 106a | central stress control elements (Faraday cage) |
| 106b | peripheral stress control elements |
| 108 | electrically insulating hold-out layer |
| 110 | undercut |
| d1, d2 | distances of stress control elements |
| d3 | thickness of elastomeric layer |

## Claims

1. Multi-layer heat-shrinkable tubular sleeve (100, 100') comprising:
at least one hold-out layer (102, 108) formed from a heat-shrinkable material and at least one electrically insulating inner layer (104) formed from an elastomeric material;
wherein said hold-out layer comprises an electrically conductive layer (102); and
wherein said elastomeric inner layer (104) comprises a plurality of essentially ring-shaped, electrically conductive stress control elements (106) which are distanced from each other in a longitudinal direction and are embedded into the elastomeric inner layer (104) at a surface that is brought into contact with a cable in a mounted state.

2. Sleeve according to claim 1, wherein said heat-shrinkable hold-out layer further comprises a heat-shrinkable electrically insulating layer (108) arranged concentrically within said electrically conductive layer (102).

3. Sleeve according to claim 2, wherein said heat-shrinkable electrically insulating inner hold-out layer (108) is formed to have a cross-section with an enlarged surface facing the elastomeric insulating layer.

4. Sleeve according to claim 3, wherein said inner hold-out layer (108) has at least one interlocking structure (110) for interacting with the elastomeric insulating layer.

5. Sleeve according to one of the preceding claims, wherein an adhesion promoting agent is provided for enhancing an adhesion strength between the heat-shrinkable hold-out (102, 108) layer and the elastomeric inner layer (104).

6. Sleeve according to one of the preceding claims, wherein said elastomeric insulating layer (104) comprises silicone rubber, ethylene propylene diene monomer (EPDM) rubber or a gel.

7. Sleeve according to one of the preceding claims, wherein at least one stress control element (106b) is arranged at each of the peripheral regions of the sleeve and at least one stress control element (106a) is provided in an essentially central connection region for forming a Faraday cage.

8. Sleeve according to one of the preceding claims, wherein at least one of said stress control elements (106) is formed from a conducting material.

9. Cable connection for electrically connecting cables, said connection comprising a multi-layer heat-shrinkable tubular sleeve (100, 100') according to one of the preceding claims.

10. Method for fabricating a multi-layer heat-shrinkable tubular sleeve, the method comprising the steps of:
providing a plurality of essentially ring-shaped, electrically conductive stress control elements and arranging same on a fixing tool in a way that they are distanced from each other in a longitudinal direction;
providing a hollow, tube shaped hold-out layer that comprises a heat-shrinkable material which is electrically conductive, and arranging same in an essentially concentric way around said stress control elements;
joining said stress control elements and said hold-out layer by filling in an elastomeric electrically insulating material;
heating and expanding said multi-layer heat-shrinkable tubular sleeve before mounting.

11. Method according to claim 10, wherein said hold-out layer further comprises an electrically insulating heat-shrinkable inner hold-out layer.

12. Method according to claim 11, wherein said inner hold-out layer is formed to have a cross-section with an enlarged surface facing the elastomeric material.

13. Method according to claim 12, wherein said inner hold-out layer has at least one interlocking structure for interacting with the elastomeric insulating layer.

14. Method according to one of the claims 11 to 13, wherein said electrically conductive outer hold-out layer and said electrically insulating inner hold-out layer are fabricated in a co-extrusion process.

15. Method according to one of the claims 10 to 14, wherein an adhesion promoting agent is provided for enhancing an adhesion strength between the heat-shrinkable hold-out layer and the elastomeric inner layer.

## Patentansprüche

1. Mehrschichtige, wärmeschrumpfbare, rohrförmige Hülse (100, 100'), die umfasst.
wenigstens eine Abhalteschicht (102, 108), die aus einem wärmeschrumpfbaren Material ausgebildet ist, und wenigstens eine elektrisch isolierende, innere Schicht (104), die aus einem elastomerischen Material ausgebildet ist,
wobei die Abhalteschicht eine elektrisch leitende Schicht (102) umfasst, und
wobei die elastomerische, innere Schicht (104) eine Vielzahl von im Wesentlichen ringförmigen, elektrisch leitenden Belastungskontrollelementen (106) umfasst, die von einander in einer Längsrichtung beabstandet sind und in der elastomerischen, inneren Schicht (104) an einer Fläche, die in einem montierten Zustand in Kontakt mit einem Kabel gebracht wird, eingebettet sind.

2. Hülse nach Anspruch 1, wobei die wärmeschrumpfbare Abhalteschicht weiterhin eine wärmeschrumpfbare, elektrisch isolierende Schicht (108) umfasst, die konzentrisch mit der elektrisch leitenden Schicht (102) angeordnet ist.

3. Hülse nach Anspruch 2, wobei die wärmeschrumpfbare, elektrisch isolierende, innere Abhalteschicht (108) mit einem Querschnitt mit einer vergrößerten Oberfläche zu der elastomerischen, isolierenden Schicht hin ausgebildet ist.

4. Hülse nach Anspruch 3, wobei die innere Abhalteschicht (108) wenigstens einen Eingreifaufbau (110) für eine Interaktion mit der elastomerischen, isolierenden Schicht aufweist.

5. Hülse nach einem der vorstehenden Ansprüche, wobei ein Haftungsförderungsmittel zum Verstärken der Haftungsstärke zwischen der wärmeschrumpfbaren Abhalteschicht (102, 108) und der elastomerischen, inneren Schicht (104) vorgesehen ist.

6. Hülse nach einem der vorstehenden Ansprüche, wobei die elastomerische, isolierende Schicht (104) Silikonkautschuk, Ethylen-Propylen-Dien-Monomer (EPDM)-Kautschuk oder ein Gel enthält.

7. Hülse nach einem der vorstehenden Ansprüche, wobei wenigstens ein Belastungskontrollelement (106b) an jedem der Umfangsbereiche der Hülse vorgesehen ist und wenigstens ein Belastungskontrollelement (106a) in einem im Wesentlichen mittigen Verbindungsbereich für das Bilden eines Faradayschen Käfigs vorgesehen ist.

8. Hülse nach einem der vorstehenden Ansprüche, wobei wenigstens eines der Belastungskontrollelemente (106) aus einem leitenden Material ausgebildet ist.

9. Kabelverbindung für elektrisch leitende Kabel, wobei die Verbindung eine mehrschichtige, wärmeschrumpfbare, rohrförmige Hülse (100, 100') gemäß einem der vorstehenden Ansprüche umfasst.

10. Verfahren zum Herstellen einer mehrschichtigen, wärmeschrumpfbaren, rohrförmigen Hülse, wobei das Verfahren die folgenden Schritte umfasst:
Vorsehen einer Vielzahl von im Wesentlichen ringförmigen, elektrisch leitenden Belastungskontrollelementen und Anordnen derselben an einem Fixierungswerkzeug derart, dass sie voneinander in einer Längsrichtung beabstandet sind,
Vorsehen einer hohlen, rohrförmigen Abhalteschicht, die ein wärmeschrumpfbares und elektrisch leitendes Material umfasst, und Anordnen derselben im Wesentlichen konzentrisch um die Belastungskontrollelemente herum,
Verbinden der Belastungskontrollelemente und der Abhalteschicht durch das Einfüllen eines elastomerischen, elektrisch isolierenden Materials, und
Erhitzen und Erweitern der mehrschichtigen, wärmeschrumpfbaren, rohrförmigen Hülse vor dem Montieren.

11. Verfahren nach Anspruch 10, wobei die Abhalteschicht weiterhin eine elektrisch isolierende, wärmeschrumpfbare, innere Abhalteschicht umfasst.

12. Verfahren nach Anspruch 11, wobei die innere Abhalteschicht ausgebildet ist, um einen Querschnitt mit einer vergrößerten Fläche zu dem elastomerischen Material hin aufzuweisen.

13. Verfahren nach Anspruch 12, wobei die innere Abhalteschicht wenigstens einen Eingreifaufbau für das Interagieren mit der elastomerischen, isolierenden Schicht aufweist.

14. Verfahren nach einem der Ansprüche 11 bis 13, wobei die elektrisch leitende, äußere Abhalteschicht und die elektrisch isolierende, innere Abhalteschicht in einem Koextrusionsprozess hergestellt werden.

15. Verfahren nach einem der Ansprüche 10 bis 14, wobei ein Haftungsförderungsmittel vorgesehen wird, um die Haftungsstärke zwischen der wärmeschrumpfbaren Abhalteschicht und der elastomerischen, inneren Schicht zu verstärken.

## Revendications

1. Manchon tubulaire thermorétractable multicouche (100, 100') comprenant :
au moins une couche de tenue (102, 108) formée à partir d'un matériau thermorétractable et au moins une couche interne électriquement isolante (104) formée à partir d'un matériau élastomère,
dans lequel ladite couche interne électriquement isolante comprend une couche électriquement conductrice (102), et
dans lequel ladite couche interne élastomère (104) comprend une pluralité d'éléments (106) de régulation de contrainte électriquement conducteurs en forme d'anneau qui se trouvent à distance les uns des autres dans la direction longitudinale et sont intégrés dans la couche interne élastomère (104) au niveau d'une surface qui est mise en contact avec un câble à l'état monté.

2. Manchon selon la revendication 1, dans lequel ladite couche de tenue thermorétractable comprend en outre une couche électriquement isolante thermorétractable (108) agencée de manière concentrique à ladite couche électriquement conductrice (102).

3. Manchon selon la revendication 2, dans lequel ladite couche de tenue interne électriquement isolante thermorétractable (108) est formée pour présenter une section transversale comportant une surface agrandie faisant face à la couche isolante élastomère.

4. Manchon selon la revendication 3, dans lequel ladite couche de tenue interne (108) comporte au moins une structure de verrouillage mutuel (110) permettant d'interagir avec la couche isolante élastomère.

5. Manchon selon l'une des revendications précédentes, dans lequel un agent favorisant l'adhérence est prévu pour améliorer la force d'adhérence entre la couche de tenue thermorétractable (102, 108) et la couche interne élastomère (104).

6. Manchon selon l'une des revendications précédentes, dans lequel ladite couche isolante élastomère (104) comprend un caoutchouc de silicone, un caoutchouc ou un gel de monomère d'éthylène propylène diène (EPDM).

7. Manchon selon l'une des revendications précédentes, dans lequel au moins un élément de régulation de contrainte (106b) est agencé au niveau de chacune des régions périphériques du manchon, et au moins un élément de régulation de contrainte (106a) est prévu dans une région de connexion pratiquement centrale dans le but de former une cage de Faraday.

8. Manchon selon l'une des revendications précédentes, dans lequel au moins l'un desdits éléments de régulation de contrainte (106) est formé à partir d'un matériau conducteur.

9. Connexion de câbles permettant de relier électriquement des câbles, ladite connexion comprenant un manchon tubulaire thermorétractable multicouche (100, 100') conforme à l'une des revendications précédentes.

10. Procédé de fabrication d'un manchon tubulaire thermorétractable multicouche, le procédé comprenant les étapes suivantes :
l'utilisation d'une pluralité d'éléments de régulation de contrainte électriquement conducteurs pour l'essentiel en forme d'anneau, et l'agencement de ceux-ci sur un outil de fixation de manière à ce qu'ils soient espacés les uns des autres dans la direction longitudinale,
l'utilisation d'une couche creuse de tenue en forme de tube qui comprend un matériau thermorétractable qui est électriquement conducteur, et l'agencement de celle-ci de manière fondamentalement concentrique autour desdits éléments de régulation de contrainte,
la réunion desdits éléments de régulation de contrainte et de ladite couche de tenue par remplissage avec un matériau électriquement isolant élastomère,
le chauffage et la dilatation dudit manchon tubulaire thermorétractable multicouche avant tout montage.

11. Procédé selon la revendication 10, dans lequel ladite couche de tenue comprend en outre une couche de tenue interne thermorétractable électriquement isolante.

12. Procédé selon la revendication 11, dans lequel ladite couche de tenue interne est formée pour présenter une section transversale comportant une surface agrandie faisant face au matériau élastomère.

13. Procédé selon la revendication 12, dans lequel ladite couche de tenue interne comporte au moins une structure de verrouillage mutuel permettant d'interagir avec la couche isolante élastomère.

14. Procédé selon l'une des revendications 11 à 13, dans lequel ladite couche de tenue externe électriquement conductrice et ladite couche de tenue interne électriquement isolante sont fabriquées selon un procédé de co-extrusion.

15. Procédé selon l'une des revendications 10 à 14, dans lequel un agent favorisant l'adhérence est prévu pour améliorer la force d'adhérence entre la couche de tenue thermorétractable et la couche interne élastomère.
